# EUROPEAN PATENT SPECIFICATION

(11) **EP 4 531 334 B1**
(45) Date of publication and mention of the grant of the patent: **02.12.2026**
(21) Application number: 23200902.7
(22) Date of filing: 29.09.2023
(51) Int. Cl.: H04L 9/40, G06F 21/57, H04L 41/14

(54) **AUTOMATED NETWORK SECURITY ANALYSIS OF OPERATIONAL TECHNOLOGY (OT) NETWORKS**
AUTOMATISIERTE NETZWERKSICHERHEITSANALYSE VON BETRIEBSTECHNOLOGIENETZWERKEN
ANALYSE DE SÉCURITÉ DE RÉSEAU AUTOMATISÉE DE RÉSEAUX DE TECHNOLOGIE OPÉRATIONNELLE (OT)

(43) Date of publication of application: 02.04.2025
(73) Proprietor: Siemens Aktiengesellschaft, 80333 München (DE)
(72) Inventor: RAJAGOPALAN, Vijayasarathy, 560037 Bangalore (IN); VISWANATHAN, Kapaleeswaran, 560076 Bangalore (IN)
(74) Representative: Isarpatent

(56) References cited:
- EP-A1- 3 654 220
- US-A1- 2022 201 042
- PARWANI RAJIV ET AL: "Modeling and Simulating large scale Cyber Effects for Cybersecurity using Riverbed Modeler", 2020 10TH INTERNATIONAL CONFERENCE ON CLOUD COMPUTING, DATA SCIENCE & ENGINEERING (CONFLUENCE), IEEE, 29 January 2020 (2020-01-29), pages 570 - 575, XP033750356, DOI: 10.1109/CONFLUENCE47617.2020.9058026

## Description

The present invention pertains to the field of network security, and more particularly, to a method for automated network security analysis of Operational Technology (OT) networks using network attack bots for identifying vulnerabilities and generating detailed security analysis reports.

Operational Technology (OT) networks have become integral components in various industrial and critical infrastructure systems. Traditionally associated with critical industries such as manufacturing, utilities, and energy, OT networks manage and monitor physical processes and industrial operations. As these sectors are gradually employing digital solutions, ensuring the security of OT networks has become important. In general, the digitization of operations, although, offers increased efficiencies and capabilities, it also brings forth vulnerabilities that can be exploited by malicious actors. A security breach in an OT network could lead to significant operational disruptions, financial losses, and safety hazards. However, unlike their Information Technology (IT) counterparts, OT networks have a distinct set of requirements and constraints, often making their security design a unique challenge.

Traditionally, a significant amount of emphasis is placed on the post-deployment phase of networks. One of the core challenges, thereby, is the high Cost of Poor Security (COPS) when vulnerabilities and insecurities are discovered after a network is deployed. In particular, the conventional process primarily includes: first, designing the network followed by a manual network security analysis; then, physical deployment of the network components and wiring; and lastly, manual penetration testing on the deployed network. Such process means that penetration testing, a method to determine security weaknesses, is only conducted after the network has been deployed, thereby possibly exacerbating risks and associated costs.

A review of the existing literature and prior art indicates that although network simulation and emulation techniques have been utilized for red-blue teaming exercises to emulate attack and defence scenarios in a controlled environment, these methods do not provide a repeatable framework for analysing the security of a network design. Furthermore, some existing patents, such as US9276951B2, propose methodologies for identifying network security risks based on known vulnerabilities for each network node, but these strategies are largely aligned with maintaining the security of already deployed networks rather than assisting in the design phase.

PARWANI RAJIV ET AL: "Modeling and Simulating large scale Cyber Effects for Cybersecurity using Riverbed Modeler", 2020 10TH INTERNATIONAL CONFERENCE ON CLOUD COMPUTING, DATA SCIENCE & ENGINEERING (CONFLUENCE), IEEE, 29 January 2020*,* discloses about organizations having moved towards service based architectures and applications hosted in clouds, where interruption in online delivery of services causes problems to a large number of users. PARWANI RAJIV ET AL presents the use of network security simulation and modeling for understanding the effect of cyberattacks such as DDoS on a system. Experimentations conducted include deployment of services such as FTP, Email, and HTTP in a simulated environment, with the main aim of simulating network infrastructure and security policies before online deployment of the services.

EP3654220A1 discloses a method for securing a service implemented on a computer network that includes identifying network assets in the computer network used by the service. The method includes identifying vulnerabilities in one or more of the network assets, determining an asset risk score for each of the network assets, and determining a service risk score for the service. The method involves implementing one or more vulnerability remediation actions on the computer network to reduce the service risk score and secure the service.

As digital transformation continues, it is imperative to have a more proactive, pre-emptive approach to network security. The present invention seeks to fill this prevalent gap in the network security domain. Instead of a post-deployment penetration testing approach, the present invention offers a method to automatically detect potential security vulnerabilities in a network design through automated analysis on an emulated/simulated model of the said network. The emphasis here is on the pre-deployment phase, ensuring that networks are secure from the start, thereby potentially reducing COPS.

The present invention seeks to overcome these challenges by using a combination of functions ranging from generating a network model based on configuration and device capabilities to deploying an attack bot on identified sub-networks in the network model. The attack bot is configured to run penetration testing and other security attack software to detect vulnerabilities. Following the identification of attack surfaces, the present invention assesses risks for each attack surface and offers configuration recommendations to enhance network security.

The present invention fundamentally alters the conventional OT network design process by utilizing the sequence involving, first, design of a network model corresponding to the OT network design, accompanied by manual network security analysis; second, automated network security analysis where penetration testing is automated on the network model to detect security vulnerabilities; subsequently, physical deployment of the network components and wiring; and then, optionally, manual penetration testing of the deployed network. Such an approach not only enhances the security of OT networks but also ensures that network administrators are equipped with tools allowing them to rectify design and configuration vulnerabilities even before actual network deployment.

The object of the present invention is achieved by a computer-implemented method automated network security analysis of Operational Technology (OT) networks. The method comprises creating a network model for a given OT network based on input design specifications. The method further comprises identifying each subnetwork within the created network model. The method further comprises connecting a network attack bot to each identified subnetwork in the created network model. The method further comprises simulating or emulating the created network model. The method further comprises initiating execution of each network attack bot connected to the simulated or emulated network model. The method further comprises collecting data from each network attack bot for identifying attack surfaces in the simulated or emulated network model. The method further comprises classifying risk for each attack surface based on the collected data and a risk profile defined for the created network model. The method further comprises generating a network security analysis report for the given OT network based on the classified risk for each attack surface in the simulated or emulated network model thereof.

In one or more embodiments, the input design specifications comprise user-provided data regarding one or more of network topology and security configurations, and service and device capability definitions, for the given OT network.

In one or more embodiments, the step of identifying each subnetwork within the created network model comprises parsing the created network model to determine each interconnect node therein, wherein the interconnect node comprises any one of network switch, network hub, router, modem, gateway, firewall.

In one or more embodiments, the step of connecting the network attack bot to each identified subnetwork in the created network model comprises deploying the network attack bot as a network node connected to each interconnect node in the created network model.

In one or more embodiments, the step of simulating or emulating the network model comprises the use of a network simulator or a network emulator capable of simulating or emulating the user-provided data regarding one or more of the network topology and security configurations, and the service and device capability definitions, for the given OT network.

In one or more embodiments, the step of initiating the execution of each network attack bot connected to the simulated or emulated network model comprises triggering execution of penetration testing by each network attack bot at a user-defined sequence in the simulation or emulation of the created network model.

In one or more embodiments, the network attack bots are configured to execute penetration testing using a range of attacks, comprising one or more of brute-force attacks, malware simulations, and exploit-based attacks.

In one or more embodiments, the step of collecting the data from each network attack bot for identifying each attack surface in the simulated or emulated network model (312) comprises collecting tuples of data, wherein each tuple comprises a network address of a victim network node, a service port in the victim network node, and details of service weakness for the victim network node.

In one or more embodiments, the step of classifying the risk for each attack surface based on the collected data and the risk profile defined for the created network model comprises categorizing the risk as one of: a low security risk, a medium security risk, or a high security risk.

In one or more embodiments, the risk profile is defined to classify each attack surface as one of: the low security risk if the network attack bot connected to the corresponding subnetwork is able to access network addresses and/or open ports of network nodes within the said subnetwork only, the medium security risk if the network attack bot connected to the corresponding subnetwork is able to access network addresses and/or open ports of network nodes up to one hop away from the said subnetwork, and the high security risk if the network attack bot connected to the corresponding subnetwork is able to access network addresses and/or open ports of network nodes up to two hop away from the said subnetwork, in the simulated or emulated network model.

In one or more embodiments, the risk profile is defined to classify each attack surface as one of: the low security risk if a Denial of Service (DoS) attack of a predetermined scale on a target node results in temporary disruption in availability of a victim node, the medium security risk if the DoS attack of the predetermined scale on the target node results in degradation of the functionality of the victim node, and the high security risk if the DoS attack of the predetermined scale on the target node results in unavailability of the victim node.

In one or more embodiments, the generated network security analysis report comprises details related to each attack surface identifying instances of insecure network configuration settings, network design flaws, inadequate security controls, and exploitable vulnerabilities within the corresponding subnetwork and network nodes associated with each attack surface.

In one or more embodiments, the generated network security analysis report further comprises one or more network configuration changes for at least one of the identified instances of faulty or insecure network configuration settings, network design flaws, inadequate security controls, and exploitable vulnerabilities within the corresponding subnetwork and the network nodes associated with each attack surface.

The object of the present invention is also achieved by a system comprising one or more processing units and a memory unit configured to execute the steps of the computer-implemented method according to any one of the preceding method steps.

The object of the present invention is further achieved by a computer program product, having machine-readable instructions stored therein, that when executed by the one or more processing units, cause the processing unit to perform aforementioned method steps.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a flowchart representation of a computer-implemented method for automated network security analysis of Operational Technology (OT) networks, in accordance with one or more embodiments of the present invention;
- FIG 2: is a block diagram representation of a system for automated network security analysis of the OT networks, in accordance with one or more embodiments of the present invention;
- FIG 3: is a block diagram representation of implementation of the system for automated network security analysis of the OT networks, in accordance with one or more embodiments of the present invention;
- FIG 4: is an exemplary interface depicting execution of a network attack bot connected to a simulated or emulated network model of a given OT network as a part of automated network security analysis thereof, in accordance with one or more embodiments of the present invention; and
- FIG 5: is an exemplary interface depicting a generated network security analysis report as a result of automated network security analysis of the OT networks, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for automated network security analysis of Operational Technology (OT) networks are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

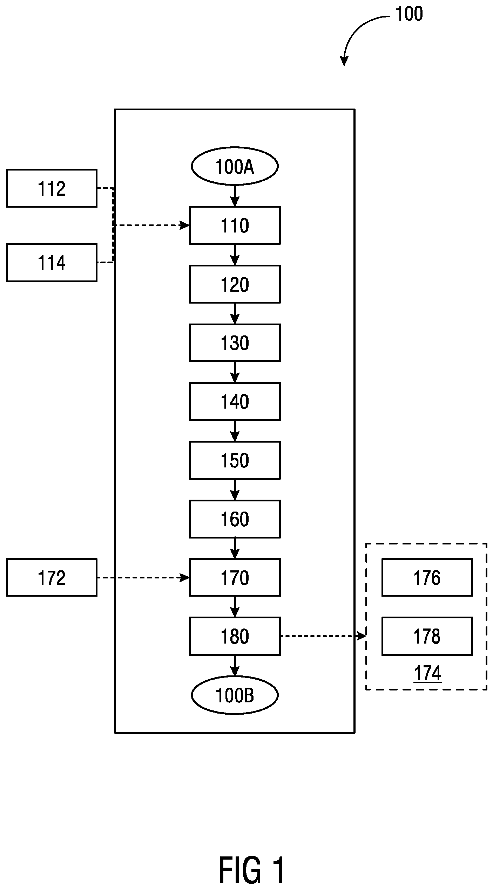

Referring now to FIG 1, illustrated is a flowchart of a method (as represented by reference numeral 100) for automated network security analysis of Operational Technology (OT) networks, in accordance with an embodiment of the present invention. As used herein, "Operational Technology" refers to the computing and communication systems used to manage, direct, and control industrial operations. This differs from traditional Information Technology (IT) systems in terms of their application. While IT systems are designed to process data and ensure data flow, OT systems monitor and control physical processes and the devices that drive them. OT networks prioritize real-time data processing because industrial operations, like manufacturing or power generation, demand immediate response to maintain safety and efficiency. OT networks connect with devices like sensors, actuators, PLCs (Programmable Logic Controllers), and SCADA (Supervisory Control and Data Acquisition) systems. These devices are responsible for actual industrial tasks, from temperature sensing to conveyor belt operations. Traditionally, OT networks were isolated from broader IT networks to protect them from external threats. However, with the rise of IoT (Internet of Things) and increased connectivity, many OT networks are now integrated with IT networks.

Given the increasing complexity and connectivity of OT networks, ensuring their security is vital. Manual security checks are often insufficient due to the speed and dynamic nature of cyber threats. Thus, there is a need for automated network security analysis. With automation, security solutions can scale across extensive industrial setups without the need for proportionally increasing manual oversight. Automated systems are capable of using advanced algorithms and machine learning to predict and identify threats before they become critical. Thus, automated network security analysis provides a robust, scalable, and efficient solution to protect OT networks, ensuring their integrity, availability, and safety.

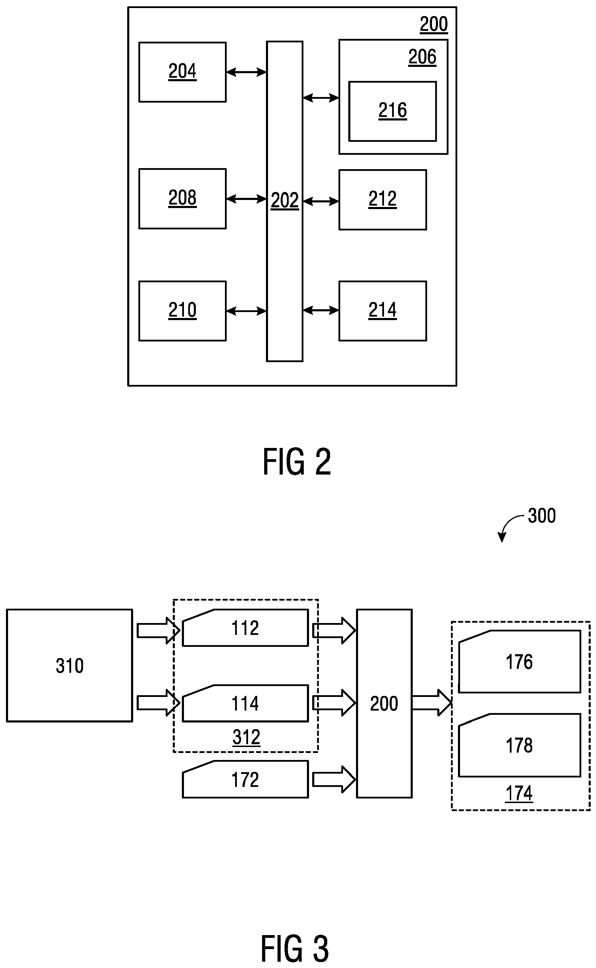

Referring to FIG 2, illustrated is a block diagram of a system 200 for automated network security analysis of the OT networks, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for automated network security analysis of the OT networks. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for automated network security analysis of the OT networks. In particular, the memory unit 206 includes an automated network security analysis module 216 to perform steps for the said purpose. Also, in the system 200, the memory unit 206 may be configured to store the data associated with or generated by the execution of the inventive steps.

Further referring to FIG 3, illustrated is a block diagram representation of a process flow (as represented by reference numeral 300) of implementation of the system 200 for automated network security analysis of the OT networks, in accordance with one or more embodiments of the present invention. As illustrated, the system 200 works in collaboration with a network simulator or network emulator (as represented by reference numeral 310) which is configured to generate a model of a given network. In an exemplary implementation, CORE network emulator is used which offers both a visual and functional portrayal of the network model, granting users the flexibility to interact, modify, and experiment with different scenarios. In other implementations, other alternatives like Mininet, which creates a genuine virtual network ambiance with real kernel and application code, and simulators such as NS3 or OMNET, which rely on mathematical algorithms rather than emulation, can be employed without any limitations. It may be contemplated that, although, in the present embodiments, the network simulator or emulator 310 is shown to be separated from the system 200; in other examples, the network simulator or emulator 310 may be part of the system 200 without departing from the scope of the present invention.

Referring to FIGS 1-3, in combination, the various steps of the method 100 as described hereinafter may be executed in the system 200, or specifically in the processing unit 204 of the system 200, for automated network security analysis of the OT networks. For purposes of the present invention, the present method 100 is embodied as an automated network security analysis algorithm. It may be appreciated that although the method 100 is illustrated and described as a sequence of steps, it may be contemplated that various embodiments of the method 100 may be performed in any order or a combination and need not include all of the illustrated steps. The method 100 starts at step 100A and ends at step 100B.

At step 110, the method 100 includes creating a network model (as represented by reference numeral 312 in FIG 3) for a given OT network based on input design specifications. Creating the network model 312 for the given OT network is a foundational step in the security analysis process, serving as a structured, virtual representation that permits risk-free evaluation and assessment. As discussed, such modelling of the given OT network may be achieved by utilization of network simulators or emulators 310. Herein, every distinct entity within the OT network, be it a network device like a firewall or a computing device such as an industrial sensor, is modelled as a network node. Adopting this procedure serves two main purposes. Firstly, the creation of a virtualized computing and network environment allows that multiple 'network nodes' can operate within a single computer system, effectively mimicking the actions and features of a real-world device within an OT network (such as, the given OT network). Secondly, each node is designed to function similarly to a real-world computing device, complete with one or more virtual network interfaces that represent physical or wireless connections corresponding to the device. Further, the connections between the network interfaces of each network node is modelled as communication channels. Thus, if (for example) a firewall network node is to be connected to a network-switch network node, a communication channel connects a network interface of the firewall network node with a network interface of the network-switch network node.

In an embodiment, the input design specifications comprise user-provided data regarding one or more of network topology and security configurations (as represented by reference numeral 112), and service and device capability definitions (as represented by reference numeral 114), for the given OT network. That is, the method 100 includes receiving or gathering input design specifications which includes the network topology and security configurations 112, and the service and device capability definitions 114. Herein, the network topology and security configurations 112 provides network topology details including structural layout and how different network and computing devices connect with each other, and security configurations details including specific settings and policies engineered to safeguard network data, like firewall stipulations, encryption methods, and verification processes. Further, the service and device capability definitions 114 provide details about the functionalities and services each device within the network offers, such as monitoring environmental factors in industrial applications, and the network communication protocols used for this purpose. Typically, these input design specifications are sourced from external software tools utilized in designing or managing the OT network.

As illustrated in FIG 3, the created network model 312 may include (carry) details of the input design specifications including the network topology and security configurations 112, and the service and device capability definitions 114, for the given OT network, therein. These details may be utilized by the system 200 for further processing steps in implementation of the method 100, as described in the proceeding paragraphs.

At step 120, the method 100 includes identifying each subnetwork within the created network model 312. That is, the method 100 involves the identification of each subnetwork within the created network model 312 of the given OT network. This process implements a systematic parsing mechanism to navigate through the entirety of the network model 312, and rendering its structure to identify distinct elements. In particular, the method 100 focuses on identifying network nodes corresponding to components which play a junction points in managing the flow of data within the network, as such component (network node) signifies the start or end of a subnetwork in the broader OT network framework. It may be appreciated that identifying each subnetwork within the created network model 312 ensures a complete understanding of the network's overall structure. Thus, this step 120 is important for a detailed security analysis, as by clearly understanding the entire network, including its smaller subnetworks, the security analysis can be more thorough and effective.

In an embodiment, the step of identifying each subnetwork within the created network model 312 comprises parsing the created network model 312 to determine each interconnect node therein. That is, the parsing is directed towards identifying the interconnect nodes, which serve as the central junction points or hubs facilitating communication and data exchange within the network. The importance of these interconnect nodes lies in their role in networking, as they act as bridges or relay points for the flow of data. By determining these nodes, it is possible to understand the network's underlying structure and consequently map out its subnetworks. This becomes invaluable when assessing network vulnerabilities, as these nodes often are key points of interest in terms of security.

Herein, the term "interconnect node" is not limited to a singular type of device but includes an array of devices that are typically employed to ensure connectivity in OT networks. In present embodiments, the interconnect node comprises any one of network switch, network hub, router, modem, gateway, firewall. That is, the interconnect node includes widely recognized devices like network switches, which direct data flow based on MAC addresses, and routers, which decide the best path for data based on IP addresses. It also encompasses network hubs, which simply broadcast received data to every other device in the network; modems, which modulate and demodulate digital and analog signals for communication purposes; gateways, which act as the door between two different networks, often translating data for compatibility; and firewalls, designed to enforce network security policies by permitting or blocking data based on a set of security rules. Each of these devices plays a distinct role in the network and can be considered significant nodes for security evaluations.

At step 130, the method 100 includes connecting a network attack bot to each identified subnetwork in the created network model 312. The network attack bot, for the purposes of this invention, is not merely a generic component but rather serves as a specialized network node. The network attack bot is configured to operate penetration testing software. In addition, the network attack bot is configured with the functionalities to run a suite of other security attack software. Such functionalities enable the network attack bot to systematically emulate cyber-attacks on the network model 312 of the given OT network, aiming to identify potential vulnerabilities that could be exploited in real-world scenarios.

In the present implementations, the network attack bot has the ability to operate independently. There is no need for continuous human monitoring, as the network attack bot is designed to operate on its own. This ensures that the network attack bot performs security testing consistently and without the errors that can occur with human intervention. Additionally, in the present implementations, the operations of the network attack bot can be scheduled. Users or system administrators have the option to determine when the network attack bot starts its security checks and simulated attacks. This capability to time its actions ensures that the testing can align with various scenarios, making the security analysis both robust and adaptable to different network conditions. Using this network attack bot provides an in-depth look at potential weak points in the network model 312, and thereby the corresponding given OT network, leading to a complete analysis and recommendations for improving security, as discussed in more detail in the proceeding paragraphs.

In an embodiment, the step of connecting the network attack bot to each identified subnetwork in the created network model 312 comprises deploying the network attack bot as a network node connected to each interconnect node in the created network model 312. As discussed, in the present implementations, the network attack bot is not merely a software agent, but is specially configured to function as a distinct network node. The deployment of the network attack bot, herein, refers to installation or positioning of the network attack bot within the network, ensuring it is functionally integrated for its security testing role. Rather than being positioned arbitrarily or at random, the network attack bot is strategically linked to each of the identified interconnect nodes. These interconnect nodes, as previously described, are the central hubs or juncture points like routers, switches, modems, and firewalls, which facilitate the communication within the network. Connecting the network attack bot directly to these interconnect nodes enables it to simulate or emulate attacks effectively across the network. Specifically, by being connected to each interconnect node, the network attack bot can efficiently probe, scan, and attempt to exploit potential vulnerabilities not just at these juncture points, but also across the linked subnetworks.

At step 140, the method 100 includes simulating or emulating the created network model 312. The purpose of this step 140 is to replicate the real-world behaviour, responses, and interactions of the various components present in the network model 312 without actually deploying them in a physical environment. As used herein, "simulation" typically involves modelling the behaviour of a system by a network simulator (such as, the network simulator 310). The network simulator 310 would create a mathematical model of the network and predict its behaviour under different conditions based on that model. This approach is useful for theoretical analyses and understanding potential outcomes without any actual replication of the network's exact operational environment. On the other hand, "emulation" aims to replicate the exact behaviours and functionalities of a network by creating a one-to-one operational equivalence. A network emulator (such as, the network emulator 310), thus, would not just predict but actually replicate the real-world interactions, responses, and operations of the network based on the provided specifications. Therefore, it may be appreciated that both techniques provide a way to mimic real-world behaviours of the given IT network, however they achieve the purpose differently.

In the process of simulating or emulating the created network model 312, all the network nodes and communication channels that have been configured in the previous steps are executed during this stage. Each network node plays a crucial role in this process. These nodes, which represent various devices and components in the network, such as computers, industrial devices, firewalls, and network switches, are activated in the simulation/emulation, and their functionalities are put to the test, ensuring that they operate as intended. For example, a network node representing a firewall will actively filter virtualized network traffic, ensuring that unauthorized or malicious packets are appropriately blocked, just as it would in an actual operational environment. Parallelly, the communication channels that interlink these network nodes are also activated. These channels simulate/emulate the physical (or wireless) connections that exist in real networks, to help in evaluating the reliability of data transfer within the network model 312. This facilitates a real-time representation and evaluation of the network model 312, ensuring that all interactions and communication pathways within the model function as they would in an actual operational environment, which, in turn, allows for robust testing scenarios where any vulnerabilities or flaws in the network can be identified without causing actual harm or disruption to real-world systems.

In an embodiment, the step of simulating or emulating the network model 312 comprises the use of a network simulator or a network emulator (such as, the network simulator or emulator 310) simulating or emulating the user-provided data regarding one or more of the network topology and security configurations 112, and the service and device capability definitions 114, for the given OT network. That is, the mechanism by which this simulation or emulation is achieved is through the utilization of specific simulation and/or emulation tools. As discussed, in an exemplary implementation, the CORE network emulator may be used for this purpose; however, the present method 100 offers the flexibility to integrate and utilize other network simulation tools, such as NS3 or OMNET, depending on specific requirements and desired outcomes. This adaptability ensures that the most suitable tools can be employed to provide a precise and accurate representation of the network model 312, enhancing the reliability of subsequent security analyses. Further, herein, the simulation or emulation is not arbitrary, but instead based on the user-provided data including the network topology and security configurations 112, and/or the service and device capability definitions 114. This user-provided data is considered to accurately depict how the network would function in real-world scenarios. By leveraging these tools, the method 100 can effectively identify any inconsistencies, vulnerabilities, or potential areas of improvement in the network model 312 without ever having to deploy it in a real-world scenario, thereby ensuring robustness and security from the outset.

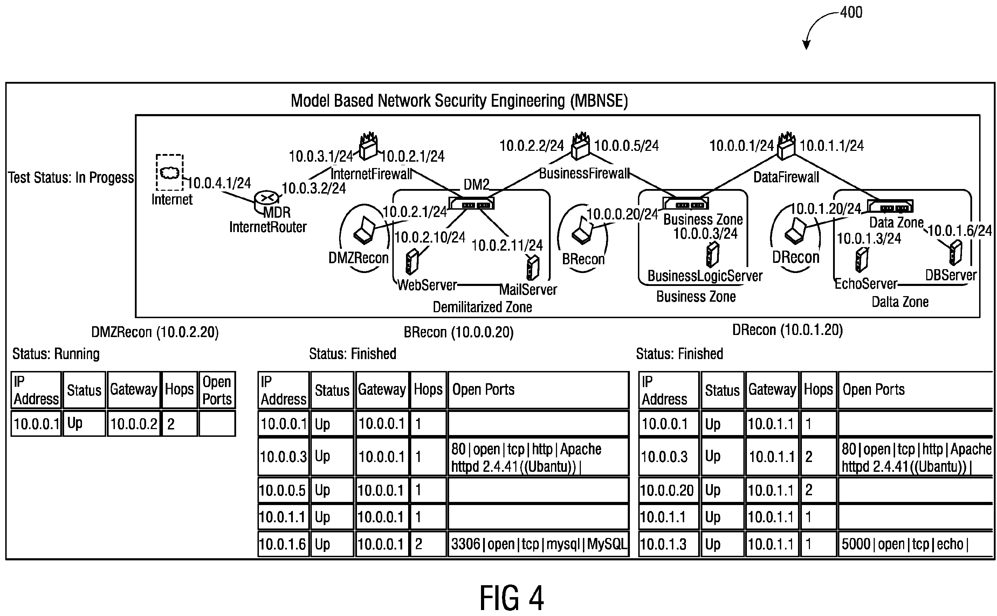

At step 150, the method 100 includes initiating execution of each network attack bot connected to the simulated or emulated network model 312. Herein, the operations of the penetration testing and attack software within the network attack bot is initiated. Such initiation provides a mechanism to identify and quantify the vulnerabilities present within the network by deploying the network attack bots to actively engage and test the network's defensive structures. This helps to understand the resilience and responsiveness of the network to varied threat models. Furthermore, since these activities occur within a controlled, virtualized environment, it guarantees that the real infrastructure remains insulated from any inadvertent disruptions or damages as result of these tests. FIG 4 depicts an exemplary interface (as represented by reference numeral 400) showing execution of the network attack bot connected to the simulated or emulated network model 312 of the given OT network, in accordance with one or more embodiments of the present invention. This procedure is adapted to offer a comprehensive assessment of the network's vulnerabilities, while ensuring the integrity of the actual infrastructure remains uncompromised.

Herein, the network attack bots are configured to execute penetration testing using a range of attacks, comprising one or more of brute-force attacks, malware simulations, and exploit-based attacks. As discussed, the network attack bots are designed as comprehensive testing agents, to probe the network's defences across a spectrum of potential threats. In particular, the network attack bots are configured to execute a diverse range of attack simulations, each tailored to test a specific issue of the network's security. For instance, the network attack bots may execute brute-force attacks which represent one of the most direct and aggressive methods employed by malicious entities to gain unauthorized access. Such execution may provide assessment of password strength policies, account lockout procedures, and detection mechanisms within the network. Additionally, or alternatively, the network attack bots may execute a plurality of malware types, from ransomware to trojans. By introducing controlled malware simulations, the network attack bots furnish insights into the network's malware detection capabilities, the efficacy of antivirus solutions, and the responsiveness of incident response protocols. Furthermore, the network attack bots may execute exploit-based attacks, leveraging known exploits to probe the network, to evaluate vulnerability assessment processes, and the overall strength of the network's infrastructure. By equipping the network attack bots with a plurality of attack simulations/emulations, ranging from brute-force methods to exploit-based techniques, the present method 100 ensures a comprehensive and multi-dimensional evaluation of defence mechanisms of the given OT network.

In an embodiment, the step of initiating the execution of each network attack bot connected to the simulated or emulated network model 312 comprises triggering execution of penetration testing by each network attack bot at a user-defined sequence in the simulation or emulation of the created network model 312. That is, the execution of network attack bots is timed and defined, and is not arbitrary. This user-defined sequence helps in simulating/emulating a diverse range of attack methodologies and patterns. The sequence determines the order in which each network attack bot initiates its operations, simulating different penetration tests. Such user-defined sequence enable a multifaceted security assessment. By designing the user-defined sequence, the simulated/emulated network can be subjected to a wide spectrum of threats, from rudimentary brute-force methods to intricate, multi-pronged cyber-attacks at different intervals in a proper order. Each network attack bot, during its operation, conducts targeted penetration tests. These tests evaluate existing security measures, assess potential vulnerabilities, and evaluate the network's detection and response mechanisms.

At step 160, the method 100 includes collecting data from each network attack bot for identifying attack surfaces in the simulated or emulated network model 312. As discussed, each network attack bot operates with the intent to simulate or emulate varying cyber-attacks on specific areas of interest, referred to, herein, as attack surfaces. Specifically, the attack surface is a security vulnerability detected by the penetration testing and attack software configured in the network attack bot after the simulation/emulation has started. In other words, these attack surfaces denote points within the network where interactions, and consequently vulnerabilities, might occur. Such attack surfaces may include software interfaces, hardware ports, user access points, and other data interaction zones, each with its distinct security protocols and potential vulnerabilities. Each network attack bot generates a list of attack surfaces after all the penetration testing and attack software configured in the network attack bot complete their execution. Moreover, when a network attack bot is executed, it records every interaction and probing attempt on these attack surfaces. The collected data includes details such as the nature of the attack initiated by the network attack bot, how the network's defensive mechanisms responded, the effectiveness of the simulated/emulated attack, and the like. This collected data serves to provide details on the performance and reliability of the network's defences, and thereby to obtain a comprehensive understanding of the strengths and potential vulnerabilities associated with the network's security measures.

As used herein, the attack surface is described by a collection of tuples which provide a unique, machine generatable, machine readable and user understandable identifier for each identified attack surface. In other words, the tuple provides an identifier for every distinct attack surface in the network, ensuring precision in its identification and assessment. In an exemplary implementation, each tuple may include a network address of a victim network node, a service port in the victim network node, details of service weakness for a service running in the service port of the victim network node. Herein, the victim network node represents a specific device, component, or interface within the network that is under evaluation for vulnerabilities or is a potential target for a security probe or attack.

In an embodiment, the step of collecting the data from each network attack bot for identifying each attack surface in the simulated or emulated network model 312 comprises collecting the tuples of data, with each tuple comprising the network address of the victim network node, the network port in the victim network node, and the details of service weakness for a service running in the service port of the victim network node. The network address of the victim network node allows for precise location and communication with that particular network component. Also, as may be understood, every service or application within a device typically listens on a specific port, thus the network port in the victim network node helps to identify which ports are active and what they are used for. Furthermore, the details of service weakness for the victim network node in the tuple may include inherent vulnerabilities, outdated software versions, or misconfigurations that could be exploited by malicious actors.

Following the collection phase, the acquired data is processed for analysis. This includes comparing the collected data against recognized vulnerabilities and security standards to determine the network's current security posture. Such an in-depth evaluation offers insights into potential areas of improvement, whether they be in the form of software updates, hardware enhancements, or alterations to security policies.

At step 170, the method 100 includes classifying risk for each attack surface based on the collected data, and a risk profile (as represented by reference numeral 172 in FIG 1) defined for the created network model 312. That is, once data concerning potential vulnerabilities is collected from the network model 312, the next step is to assess risk to the corresponding given OT network. This assessment of risk involves the classification of risk associated with each identified attack surface. This classification is derived from the combination of the collected data (as discussed in the preceding paragraph), and the risk profile 172 which is predefined based on the particulars of the created network model 312. Herein, the risk profile 172 is a risk definition matrix that describes what the attacker can and cannot access in a victim node. As used herein, the "victim node" refers to a network node or device within the OT network that is identified as susceptible to potential threats or vulnerabilities. The risk profile 172 functions as a comparative benchmark, representing expected security parameters and thresholds against which the collected data is compared. To facilitate the classification process and ensure its systematic execution, the implementation can be embodied by utilizing computational script, such as a shell script or a Python script. These scripts are specifically designed to parse the collected data, aligning it with the risk profile 172 and subsequently classifying the risk classification for each attack surface.

In an embodiment, the step of classifying the risk for each attack surface based on the collected data and the risk profile defined for the created network model 312 comprises categorizing the risk as one of: a low security risk, a medium security risk, or a high security risk. That is, the task of classifying the risk associated with each attack surface specifies a systematic categorization based on the collected data and the risk profile 172 for the constructed network model 312, specifically into three risk tiers: low security risk, medium security risk, and high security risk. Each of these tiers has its own distinct set of characteristics and implications. Herein, the low security risk may encompass vulnerabilities that, though present, pose a minimal threat to the network's overall security. Such vulnerabilities might be difficult to exploit, may require a high level of expertise, or might impact non-critical systems or data. The medium security risk may encompass vulnerabilities which may be exploitable under certain conditions or may lead to limited unauthorized access or data exposure. Such vulnerabilities might affect semi-critical systems or could be mitigated with existing secondary defences. The high security risk represents vulnerabilities that pose a significant and immediate threat to the network's security. Such vulnerabilities are often easily exploitable, can lead to substantial unauthorized access or data breaches, and may impact mission-critical systems or services.

In an embodiment, the risk profile is defined to classify each attack surface as one of: the low security risk if the network attack bot connected to the corresponding subnetwork is able to access network addresses and/or open ports of network nodes within the said subnetwork only, the medium security risk if the network attack bot connected to the corresponding subnetwork is able to access network addresses and/or open ports of network nodes up to one hop away from the said subnetwork, and the high security risk if the network attack bot connected to the corresponding subnetwork is able to access network addresses and/or open ports of network nodes up to two hop away from the said subnetwork, in the simulated or emulated network model 312. That is, the low security risk classification applies to instances where the network attack bot, when connected to a given subnetwork, is restricted in its access solely to the network addresses and open ports of network nodes residing within that specific subnetwork; the medium security risk classification applies to instances where the network attack bot, upon connection to a designated subnetwork, possesses the capability to access the network addresses and open ports of network nodes situated just one hop away from its incumbent subnetwork; and the high security risk classification applies to instances in which the network attack bot, from its position in a particular subnetwork, can effectively access the network addresses and open ports of network nodes that are distant by two hops from its primary subnetwork. For example, if a network attack bot connected to a network-switch network node can access the network addresses and open ports in all network nodes connected to the same network-switch network node, then the risk profile may be specified as low. On the contrary, if a network attack bot connected to a network-switch network node can access network nodes connected to a network-switch network node that is two network hops away from the network attack bot, then the risk may be classified as high because the reachability of the attack is higher in terms of network hops.

In an embodiment, the risk profile is defined to classify each attack surface as one of: the low security risk if a Denial of Service (DoS) attack of a predetermined scale on a target node results in temporary disruption in availability of the victim node, the medium security risk if the DoS attack of the predetermined scale on the target node results in degradation of the functionality of the victim node, and the high security risk if the DoS attack of the predetermined scale on the target node results in unavailability of the victim node. Herein, the risk profile is defined to categorize the vulnerabilities associated with each attack surface, emphasizing the potential outcomes of the DoS attack of a set magnitude on the victim node. In such case, the low security risk classification applies to instances where, following a DoS attack of the predetermined scale, there is only a brief disturbance in the routine operations of the victim node (i.e., the victim node might experience a disruption but subsequently returns back to its standard operation without needing extensive remedial actions); the medium security risk classification applies to instances where the network attack bot leads to a noticeable reduction in the functionality of the victim node following a DoS attack of the predetermined scale(i.e., the victim node, while still functional, operates at a diminished capacity, potentially affecting the quality of its services and any dependent processes); and the high security risk classification applies to instances where the victim node becomes entirely inoperative following a DoS attack of the predetermined scale (i.e., the victim node is inoperative, failing to provide its services or perform its inherent duties). For example, consider a scenario where a network attack bot launches a DoS attack of a predetermined scale against a server node within an organizational network. If, post-attack, the server node only experiences a short-lived disruption in its services, without significantly impeding the network's overall functionality, then the risk profile may be classified as low security risk. However, if after the same DoS attack, the server node's performance is notably reduced, where it still functions but at a significantly lowered capacity, the risk profile may be classified as a medium security risk. And, if the DoS attack causes the server node to be completely non-operational, rendering it inaccessible and unable to perform its designated tasks, the risk profile may be classified as a high security risk.

In present implementations, the method 100 may further include implementing fine-grained risk profiles for different network nodes (segments) based on the possibility of specific attacks on specific targets. This can depend on the criticality of potential victims. For example, if a DoS attack of a particular scale (for example, greater than 10,000 data requests per second) can be carried out (in simulation) on a specific victim node and can result in unavailability of services on that victim node, then the risk profile for this particular attack vector with respect to a given machine may be specified to be very high security risk.

Furthermore, in an exemplary implementation, the process of classifying the risk for each attack surface may involve computing a risk score therefor. This risk score may be in the form of a quantitative representation that represents the severity, likelihood, and potential impact of the vulnerabilities associated with each attack surface. To calculate this risk score, various factors and metrics related to the attack surface are taken into consideration. These may include the nature and type of the potential vulnerability, the accessibility of the attack surface from external entities, the criticality of the data or services that could be affected, and historical data about similar vulnerabilities and their consequences. Such computed risk score, being numerical, may provide an objective measure of the risk, enabling easier comparisons between different attack surfaces or potential threats. This allows network administrators and security professionals to prioritize their response and remediation efforts based on the risk scores.

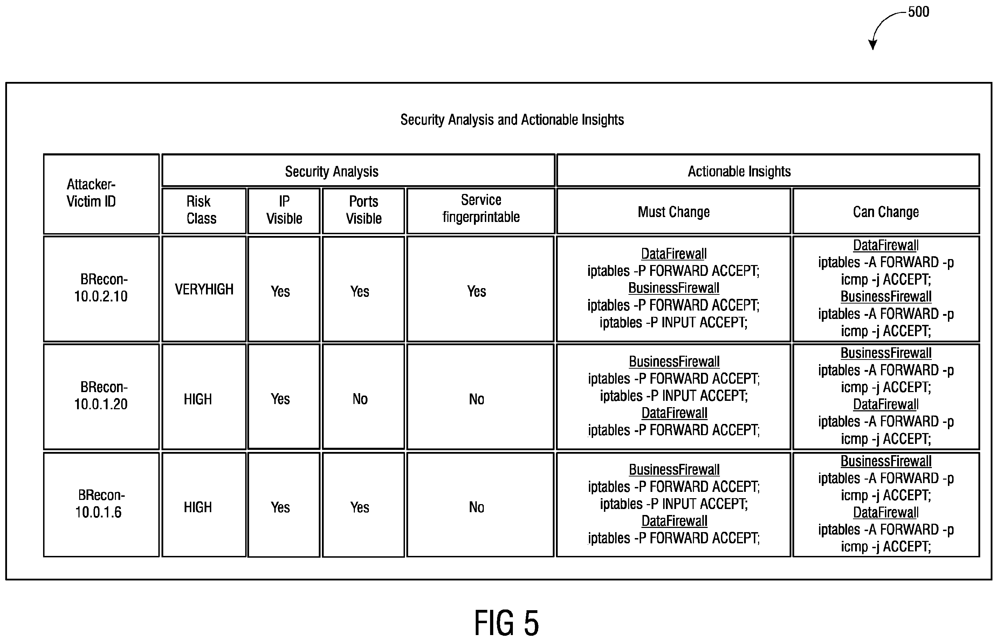

At step 180, the method 100 includes generating a network security analysis report (as represented by reference numeral 174) for the given OT network based on the classified risk for each attack surface in the simulated or emulated network model 312 thereof. As discussed previously, upon simulating or emulating the OT network, potential weak points, termed as attack surfaces, are identified, and each of these attack surfaces is then subjected to security testing, and based on which, each attack surface is classified from low to high security risk. The network security analysis report 174, as used herein, summarizes these findings. Such network security analysis report 174 may outline for each attack surface, its location within the network model 312, the nature of potential threats it might be exposed to, and the risk category it falls under. FIG 5 depicts an exemplary interface (as represented by reference numeral 500) depicting a generated network security analysis report, in accordance with one or more embodiments of the present invention. The network security analysis report 174 providing a systematic categorization, aids stakeholders in understanding which parts of their network are most vulnerable and to what extent. Further, the network security analysis report 174 also offers understandings into the potential implications of these vulnerabilities being exploited, such as, for example, a high security risk vulnerability in a critical server node would affect the entire network's operations, while a low security risk vulnerability in a less critical component may have limited impact.

Herein, the generated network security analysis report 174 comprises details of classification (as determined and represented by reference numeral 176) of risk for each attack surface. As discussed, these risk classifications 176 may range from low to high security risks, each offering a clear indication of the severity and potential impact on the overall network. By doing so, the network security analysis report 174 presents stakeholders with a structured and clear view of the most pressing vulnerabilities and areas of concern within the given OT network. Moreover, such risk classifications 176 in the network security analysis report 174 facilitate informed decision-making. For instance, network administrators, security professionals, and other relevant personnel can prioritize their response strategies and allocate resources more effectively, ensuring that the most critical vulnerabilities are addressed promptly.

In an embodiment, the generated network security analysis report 174 comprises details related to each attack surface identifying instances of insecure network configuration settings, network design flaws, inadequate security controls, and exploitable vulnerabilities within the corresponding subnetwork and network nodes associated with each attack surface. That is, for every attack surface identified within the network, the network security analysis report 174 includes details concerning various elements that may be detrimental to the network's security. Specifically, herein, the insecure network configuration settings section of the network security analysis report 174 provides details of configuration settings that may not adhere to best practices or industry standards. Examples might include open ports that should be closed, unnecessary services running on network nodes, or misconfigured firewall rules that allow unintended traffic. The network design flaws involves identifying areas where the network's structural design might have inherent weaknesses, such as the way network nodes interconnect, a lack of segmentation in crucial areas, or possibly redundancy issues that could cause operational disruptions. The inadequate security controls highlights areas where the existing security controls, such as firewalls, intrusion detection systems, or encryption protocols, might not be stringent enough or could be outdated. And, the exploitable vulnerabilities section of the network security analysis report 174 may list vulnerabilities that could be directly exploited, such as software flaws, unpatched systems, or known vulnerabilities in the system that haven't been addressed. Therefore, the network security analysis report 174 offers a comprehensive view of vulnerabilities in the given OT network. For network administrators and security personnel, the network security analysis report 174 acts as a diagnostic tool, to understand areas that demand immediate attention and remedial action.

Moreover, in an embodiment, the generated network security analysis report 174 further comprises one or more network configuration changes for at least one of the identified instances of faulty or insecure network configuration settings, network design flaws, inadequate security controls, and exploitable vulnerabilities within the corresponding subnetwork and the network nodes associated with each attack surface. That is, the network security analysis report 174, does not merely identify and classify the vulnerabilities, but also takes a proactive stance by suggesting potential solutions in the form of actionable insights (as represented by reference numeral 178) to mitigate them. For instance, for each identified vulnerability, be it a lapse in network configuration settings, flaws in the network's design, the presence of suboptimal security controls, or other detectable vulnerabilities, the network security analysis report 174 provides one or more recommended network configuration changes as the actionable insights 178. Herein, the actionable insight 178 may be defined as a remedy to a cause that made an attack surface possible for a network attack bot. The cause may be a bad firewall configuration, a bad network switch configuration, or a bad configuration for a network service. These actionable insights 178 are tailored to specifically address the unique nature and potential impact of each vulnerability within the given subnetwork and the network nodes linked to the respective attack surface.

Herein, for generating the actionable insights 178, the present method 100 considers the attack surfaces and parses the network model 312 created to determine which combination of network switch, firewall or service configuration may have caused an attack surface. For instance, if there were multiple firewalls between the attacker and the victim node, then actionable insights can provide recommendations for firewall configuration changes in each firewall. In the present implementations, the actionable insights 178 may be generated by utilizing data based on predefined algorithms designed to detect and respond to certain patterns indicative of network vulnerabilities. In other implementations, the actionable insights 178 may be generated using advanced algorithms based on artificial intelligence (AI) and machine learning (ML) techniques, facilitating dynamic and adaptive responses to emergent network threats.

In some implementations, the actionable insights 178, as part of the network security analysis report 174, may be categorized into two primary classes. The first class pertains to "must change" insights, embodying recommendations that are imperative and must be adopted for the seamless and secure functioning of the given OT network. An illustrative example of this class includes the disallowance of all input ICMP protocol packets by default. The second class pertains to "can change" insights, which, while not mandatory, are highly advisable and should be seriously considered for integration. An illustrative example of this class includes recommendation to forward packets exclusively when they correspond to a specified source-destination pairing.

Therefore, the present method 100 is equipped to initiate fully automated penetration testing probes and attacks on network models, eliminating the necessity for the deployment of the network under scrutiny. The method 100 further includes the systematic collection of attack surfaces, which are distinctly defined, as a result of such security probes and attacks. Subsequently, the method 100 incorporates an automated procedure to classify the inherent risk to the given OT network attributed to each identified attack surface. The methodology helps identify flawed configurations within network switches, firewalls, and services corresponding to each detected attack surface. Notably, the present method 100 offers the distinctive advantage of near real-time visualization of the network security testing outcomes. In addition to providing raw penetration testing data, the method 100 offers an advanced automated analysis of said data. This facilitates even those network designers lacking specialized security expertise to design secure networks. It may be appreciated that the method 100 provides network designers with an advantage like that provided by software debuggers to programmers. Network designers need not wait to find design and configuration flaws in their network until their network is deployed, which is too late and increases the cost of poor security. That is, this proactive approach negates the need to discover these flaws only post the deployment of their network, a scenario which could considerably increase the financial implications of compromised security in the given OT network.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A computer-implemented method (100) for automated network security configuration analysis of Operational Technology, OT, networks that manage and monitor physical processes and industrial operations, the method (100) comprising:
creating a network model (312) for a given OT network based on input design specifications;
identifying each subnetwork within the created network model (312);
connecting a network attack bot to each identified subnetwork in the created network model (312);
simulating or emulating the created network model (312);
initiating execution of each network attack bot connected to the simulated or emulated network model (312);
collecting data from each network attack bot for identifying attack surfaces in the simulated or emulated network model (312);
classifying risk for each attack surface based on the collected data and a risk profile (172) defined for the created network model (312); and
generating a network security analysis report (174) for the given OT network based on the classified risk for each attack surface in the simulated or emulated network model (312) thereof.

2. The method (100) of claim 1, wherein the input design specifications comprise user-provided data regarding one or more of network topology and security configurations (112), and service and device capability definitions (114), for the given OT network.

3. The method (100) of claim 1, wherein the step of identifying each subnetwork within the created network model (312) comprises parsing the created network model (312) to determine each interconnect node therein, wherein the interconnect node comprises any one of network switch, network hub, router, modem, gateway, firewall.

4. The method (100) of claim 3, wherein the step of connecting the network attack bot to each identified subnetwork in the created network model (312) comprises deploying the network attack bot as a network node connected to each interconnect node in the created network model (312).

5. The method (100) of claim 2, wherein the step of simulating or emulating the network model (312) comprises the use of a network simulator or a network emulator capable of simulating or emulating the user-provided data regarding one or more of the network topology and security configurations (112), and the service and device capability definitions (114), for the given OT network.

6. The method (100) of claim 1, wherein the step of initiating the execution of each network attack bot connected to the simulated or emulated network model (312) comprises triggering execution of penetration testing by each network attack bot at a user-defined sequence in the simulation or emulation of the created network model (312).

7. The method (100) of claim 1, wherein the network attack bots are configured to execute penetration testing using a range of attacks, comprising one or more of brute-force attacks, malware simulations, and exploit-based attacks.

8. The method (100) of claim 1, wherein the step of collecting the data from each network attack bot for identifying each attack surface in the simulated or emulated network model (312) comprises collecting tuples of data, wherein each tuple comprises a network address of a victim network node, a service port in the victim network node, and details of service weakness for the victim network node.

9. The method (100) of claim 1, wherein the step of classifying the risk for each attack surface based on the collected data and the risk profile (172) defined for the created network model (312) comprises categorizing the risk as one of: a low security risk, a medium security risk, or a high security risk.

10. The method (100) of claim 9, wherein the risk profile (172) is defined to classify each attack surface as one of: the low security risk if the network attack bot connected to the corresponding subnetwork is able to access network addresses and/or open ports of network nodes within the said subnetwork only, the medium security risk if the network attack bot connected to the corresponding subnetwork is able to access network addresses and/or open ports of network nodes up to one hop away from the said subnetwork, and the high security risk if the network attack bot connected to the corresponding subnetwork is able to access network addresses and/or open ports of network nodes up to two hop away from the said subnetwork, in the simulated or emulated network model (312).

11. The method (100) of claim 9, wherein the risk profile (172) is defined to classify each attack surface as one of: the low security risk if a Denial of Service (DoS) attack of a predetermined scale on a target node results in temporary disruption in availability of a victim node, the medium security risk if the DoS attack of the predetermined scale on the target node results in degradation of the functionality of the victim node, and the high security risk if the DoS attack of the predetermined scale on the target node results in unavailability of the victim node.

12. The method (100) of claim 1, wherein the generated network security analysis report (174) comprises details related to each attack surface identifying instances of insecure network configuration settings, network design flaws, inadequate security controls, and exploitable vulnerabilities within the corresponding subnetwork and network nodes associated with each attack surface.

13. The method (100) of claim 12, wherein the generated network security analysis report (174) further comprises one or more network configuration changes for at least one of the identified instances of faulty or insecure network configuration settings, network design flaws, inadequate security controls, and exploitable vulnerabilities within the corresponding subnetwork and the network nodes associated with each attack surface.

14. A system (200) comprising:
one or more processing units (204); and
a memory unit (206) communicatively coupled to the one or more processing units (204), wherein the memory unit (206) comprises a network security analysis module (216) stored in the form of machine-readable instructions executable by the one or more processing units, wherein the network security analysis module (216) is configured to perform the
method (100) steps for automated network security configuration analysis of Operational Technology, OT, networks, according to any of the claims 1 to 13.

15. A computer-program product having machine-readable instructions stored therein, which when executed by one or more processing units (204), cause the one or more processing units (204) to perform the computer-implemented method (100) according to any of the claims 1 to 13.

## Patentansprüche

1. Computerimplementiertes Verfahren (100) zur automatisierten Netzwerksicherheitskonfigurationsanalyse von Operational-Technology-Netzwerken, OT-Netzwerken, die physische Prozesse und industrielle Abläufe verwalten und überwachen, wobei das Verfahren (100) Folgendes umfasst:
Erstellen eines Netzwerkmodells (312) für ein gegebenes OT-Netzwerk basierend auf eingegebenen Entwurfsspezifikationen;
Identifizieren jedes Teilnetzwerks innerhalb des erstellten Netzwerkmodells (312);
Verbinden eines Netzwerkangriffsbots mit jedem identifizierten Teilnetzwerk in dem erstellten Netzwerkmodell (312);
Simulieren oder Emulieren des erstellten Netzwerkmodells (312); Initiieren der Ausführung jedes mit dem simulierten oder emulierten Netzwerkmodell (312) verbundenen Netzwerkangriffsbots;
Sammeln von Daten von jedem Netzwerkangriffsbot zum Identifizieren von Angriffsflächen in dem simulierten oder emulierten Netzwerkmodell (312);
Klassifizieren eines Risikos für jede Angriffsfläche basierend auf den gesammelten Daten und einem für das erstellte Netzwerkmodell (312) definierten Risikoprofil (172); und
Erzeugen eines Netzwerksicherheitsanalyseberichts (174) für das gegebene OT-Netzwerk basierend auf dem klassifizierten Risiko für jede Angriffsfläche in dem simulierten oder emulierten Netzwerkmodell (312) davon.

2. Verfahren (100) nach Anspruch 1, wobei die eingegebenen Entwurfsspezifikationen von einem Benutzer bereitgestellte Daten zu Netzwerktopologie und Sicherheitskonfigurationen (112) und/oder Dienst- und Gerätefähigkeitsdefinitionen (114) für das gegebene OT-Netzwerk umfassen.

3. Verfahren (100) nach Anspruch 1, wobei der Schritt des Identifizierens jedes Teilnetzwerks innerhalb des erstellten Netzwerkmodells (312) das Parsen des erstellten Netzwerkmodells (312) umfasst, um jeden Verbindungsknoten darin zu bestimmen, wobei der Verbindungsknoten ein beliebiges von Folgendem umfasst: Netzwerk-Switch, Netzwerk-Hub, Router, Modem, Gateway, Firewall.

4. Verfahren (100) nach Anspruch 3, wobei der Schritt des Verbindens des Netzwerkangriffsbots mit jedem identifizierten Teilnetzwerk in dem erstellten Netzwerkmodell (312) das Einsetzen des Netzwerkangriffsbots als mit jedem Verbindungsknoten in dem erstellten Netzwerkmodell (312) verbundener Netzwerkknoten umfasst.

5. Verfahren (100) nach Anspruch 2, wobei der Schritt des Simulierens oder Emulierens des Netzwerkmodells (312) die Verwendung eines Netzwerksimulators oder eines Netzwerkemulators umfasst, der in der Lage ist, die von dem Benutzer bereitgestellten Daten zu der Netzwerktopologie und den Sicherheitskonfigurationen (112) und/oder den Dienst- und Gerätefähigkeitsdefinitionen (114) für das gegebene OT-Netzwerk zu simulieren oder zu emulieren.

6. Verfahren (100) nach Anspruch 1, wobei der Schritt des Initiierens der Ausführung jedes mit dem simulierten oder emulierten Netzwerkmodell (312) verbundenen Netzwerkangriffsbots das Auslösen der Ausführung von Penetrationstests durch jeden Netzwerkangriffsbot in einer benutzerdefinierten Reihenfolge in der Simulation oder Emulation des erstellten Netzwerkmodells (312) umfasst.

7. Verfahren (100) nach Anspruch 1, wobei die Netzwerkangriffsbots dazu ausgelegt sind, Penetrationstests unter Verwendung einer Reihe von Angriffen, die Brute-Force-Angriffe und/oder Malware-Simulationen und/oder exploitbasierte Angriffe umfasst, auszuführen.

8. Verfahren (100) nach Anspruch 1, wobei der Schritt des Sammelns der Daten von jedem Netzwerkangriffsbot zum Identifizieren jeder Angriffsfläche in dem simulierten oder emulierten Netzwerkmodell (312) das Sammeln von Tupeln von Daten umfasst, wobei jedes Tupel eine Netzwerkadresse eines Opfernetzwerkknotens, einen Dienstport in dem Opfernetzwerkknoten und Einzelheiten einer Dienstschwäche für den Opfernetzwerkknoten umfasst.

9. Verfahren (100) nach Anspruch 1, wobei der Schritt des Klassifizierens des Risikos für jede Angriffsfläche basierend auf den gesammelten Daten und dem für das erstellte Netzwerkmodell (312) definierten Risikoprofil (172) das Kategorisieren des Risikos als eines von Folgendem umfasst: einem geringen Sicherheitsrisiko, einem mittleren Sicherheitsrisiko oder einem hohen Sicherheitsrisiko.

10. Verfahren (100) nach Anspruch 9, wobei das Risikoprofil (172) definiert ist, um jede Angriffsfläche als eines von Folgendem zu klassifizieren: dem geringen Sicherheitsrisiko, wenn der mit dem entsprechenden Teilnetzwerk verbundene Netzwerkangriffsbot nur auf Netzwerkadressen und/oder offene Ports von Netzwerkknoten innerhalb des besagten Teilnetzwerks zugreifen kann, dem mittleren Sicherheitsrisiko, wenn der mit dem entsprechenden Teilnetzwerk verbundene Netzwerkangriffsbot auf Netzwerkadressen und/oder offene Ports von Netzwerkknoten, die bis zu einen Hop von dem besagten Teilnetzwerk entfernt sind, zugreifen kann, und dem hohen Sicherheitsrisiko, wenn der mit dem entsprechenden Teilnetzwerk verbundene Netzwerkangriffsbot auf Netzwerkadressen und/oder offene Ports von Netzwerkknoten, die bis zu zwei Hops von dem besagten Teilnetzwerk entfernt sind, zugreifen kann, in dem simulierten oder emulierten Netzwerkmodell (312).

11. Verfahren (100) nach Anspruch 9, wobei das Risikoprofil (172) definiert ist, um jede Angriffsfläche als eines von Folgendem zu klassifizieren: dem geringen Sicherheitsrisiko, wenn ein Denial-of-Service(DoS)-Angriff eines vorbestimmten Ausmaßes auf einen Zielknoten zu einer vorübergehenden Störung der Verfügbarkeit eines Opferknotens führt, dem mittleren Sicherheitsrisiko, wenn der DoS-Angriff des vorbestimmten Ausmaßes auf den Zielknoten zu einer Minderung der Funktionalität des Opferknotens führt, und dem hohen Sicherheitsrisiko, wenn der DoS-Angriff des vorbestimmten Ausmaßes auf den Zielknoten zu einer Nichtverfügbarkeit des Opferknotens führt.

12. Verfahren (100) nach Anspruch 1, wobei der erzeugte Netzwerksicherheitsanalysebericht (174) auf jede Angriffsfläche bezogene Einzelheiten umfasst, die Fälle von unsicheren Netzwerkkonfigurationseinstellungen, Netzwerkentwurfsfehlern, unzureichenden Sicherheitskontrollen und ausnutzbaren Schwachstellen innerhalb des entsprechenden Teilnetzwerks und jeder Angriffsfläche zugeordneter Netzwerkknoten identifizieren.

13. Verfahren (100) nach Anspruch 12, wobei der erzeugte Netzwerksicherheitsanalysebericht (174) ferner eine oder mehrere Netzwerkkonfigurationsänderungen für mindestens einen der identifizierten Fälle von fehlerhaften oder unsicheren Netzwerkkonfigurationseinstellungen, Netzwerkentwurfsfehlern, unzureichenden Sicherheitskontrollen und ausnutzbaren Schwachstellen innerhalb des entsprechenden Teilnetzwerks und der jeder Angriffsfläche zugeordneten Netzwerkknoten umfasst.

14. System (200), das Folgendes umfasst:
eine oder mehrere Verarbeitungseinheiten (204); und
eine Speichereinheit (206), die kommunikativ mit der einen oder den mehreren Verarbeitungseinheiten (204) gekoppelt ist, wobei die Speichereinheit (206) ein Netzwerksicherheitsanalysemodul (216) umfasst, das in Form maschinenlesbarer Anweisungen, die durch die eine oder die mehreren Verarbeitungseinheiten ausführbar sind, gespeichert ist, wobei das Netzwerksicherheitsanalysemodul (216) dazu ausgelegt ist, die Schritte des Verfahrens (100) zur automatisierten Netzwerksicherheitskonfigurationsanalyse von Operational-Technology-Netzwerken, OT-Netzwerken, nach einem der Ansprüche 1 bis 13 durchzuführen.

15. Computerprogrammprodukt mit darin gespeicherten maschinenlesbaren Anweisungen, die bei Ausführung durch eine oder mehrere Verarbeitungseinheiten (204) die eine oder die mehreren Verarbeitungseinheiten (204) veranlassen, das computerimplementierte Verfahren (100) nach einem der Ansprüche 1 bis 13 durchzuführen.

## Revendications

1. Procédé (100) mis en œuvre par ordinateur pour l'analyse automatisée de configuration de la sécurité réseau de réseaux de technologie opérationnelle, OT, qui gèrent et surveillent des processus physiques et des opérations industrielles, le procédé (100) comprenant :
la création d'un modèle de réseau (312) pour un réseau OT donné sur la base de spécifications de conception d'entrée ;
l'identification de chaque sous-réseau au sein du modèle de réseau créé (312) ;
la connexion d'un bot d'attaque réseau à chaque sous-réseau identifié dans le modèle de réseau créé (312) ;
la simulation ou l'émulation du modèle de réseau créé (312) ;
le lancement de l'exécution de chaque bot d'attaque réseau connecté au modèle de réseau simulé ou émulé (312) ;
la collecte de données provenant de chaque bot d'attaque réseau pour identifier des surfaces d'attaque dans le modèle de réseau simulé ou émulé (312) ;
la classification du risque pour chaque surface d'attaque sur la base des données collectées et d'un profil de risque (172) défini pour le modèle de réseau créé (312) ; et
la génération d'un rapport d'analyse de sécurité de réseau (174) pour le réseau OT donné sur la base du risque classifié pour chaque surface d'attaque dans le modèle de réseau simulé ou émulé (312) de celui-ci.

2. Procédé (100) selon la revendication 1, dans lequel les spécifications de conception d'entrée comprennent des données fournies par l'utilisateur concernant une ou plusieurs configurations de topologie de réseau et de sécurité (112), et des définitions de capacité de service et de dispositif (114), pour le réseau OT donné.

3. Procédé (100) selon la revendication 1, dans lequel l'étape d'identification de chaque sous-réseau dans le modèle de réseau créé (312) comprend l'analyse du modèle de réseau créé (312) pour déterminer chaque nœud d'interconnexion dans celui-ci, le nœud d'interconnexion comprenant l'un quelconque parmi un commutateur de réseau, un concentrateur de réseau, un routeur, un modem, une passerelle, un pare-feu.

4. Procédé (100) selon la revendication 3, dans lequel l'étape de connexion du bot d'attaque de réseau à chaque sous-réseau identifié dans le modèle de réseau créé (312) comprend le déploiement du bot d'attaque de réseau en tant que nœud de réseau connecté à chaque nœud d'interconnexion dans le modèle de réseau créé (312).

5. Procédé (100) selon la revendication 2, dans lequel l'étape de simulation ou d'émulation du modèle de réseau (312) comprend l'utilisation d'un simulateur de réseau ou d'un émulateur de réseau capable de simuler ou d'émuler les données fournies par l'utilisateur concernant une ou plusieurs des configurations de topologie de réseau et de sécurité (112), et les définitions de capacité de service et de dispositif (114), pour le réseau OT donné.

6. Procédé (100) selon la revendication 1, dans lequel l'étape de lancement de l'exécution de chaque bot d'attaque de réseau connecté au modèle de réseau simulé ou émulé (312) comprend le déclenchement de l'exécution d'un test de pénétration par chaque bot d'attaque de réseau à une séquence définie par l'utilisateur dans la simulation ou l'émulation du modèle de réseau créé (312).

7. Procédé (100) selon la revendication 1, dans lequel les robots d'attaque réseau sont configurés pour exécuter un test de pénétration en utilisant une gamme d'attaques, comprenant une ou plusieurs parmi des attaques par force brute, des simulations de logiciels malveillants et des attaques basées sur des failles.

8. Procédé (100) selon la revendication 1, dans lequel l'étape de collecte des données en provenance de chaque bot d'attaque de réseau pour identifier chaque surface d'attaque dans le modèle de réseau simulé ou émulé (312) comprend la collecte de tuples de données, chaque tuple comprenant une adresse de réseau d'un nœud de réseau victime, un port de service dans le nœud de réseau victime, et des détails de faiblesse de service pour le nœud de réseau victime.

9. Procédé (100) selon la revendication 1, dans lequel l'étape de classification du risque pour chaque surface d'attaque sur la base des données collectées et du profil de risque (172) défini pour le modèle de réseau créé (312) comprend la catégorisation du risque comme l'un parmi : un risque de sécurité faible, un risque de sécurité moyen ou un risque de sécurité élevé.

10. Procédé (100) selon la revendication 9, dans lequel le profil de risque (172) est défini pour classifier chaque surface d'attaque comme l'un parmi : le faible risque de sécurité si le bot d'attaque réseau connecté au sous-réseau correspondant peut accéder à des adresses réseaux et/ou ouvrir des ports de nœuds de réseau au sein dudit sous-réseau uniquement, le risque de sécurité moyen si le bot d'attaque réseau connecté au sous-réseau correspondant peut accéder à des adresses réseaux et/ou ouvrir des ports de nœuds de réseau jusqu'à un saut dudit sous-réseau, et le risque de sécurité élevé si le bot d'attaque réseau connecté au sous-réseau correspondant est capable d'accéder à des adresses réseau et/ou d'ouvrir des ports de nœuds de réseau jusqu'à deux sauts dudit sous-réseau, dans le modèle de réseau simulé ou émulé (312).

11. Procédé (100) selon la revendication 9, dans lequel le profil de risque (172) est défini pour classifier chaque surface d'attaque comme l'un parmi : le faible risque de sécurité si une attaque par déni de service (DoS) d'une échelle prédéterminée sur un nœud cible entraîne une interruption temporaire de la disponibilité d'un nœud victime, le risque de sécurité moyen si l'attaque par DoS de l'échelle prédéterminée sur le nœud cible entraîne une dégradation de la fonctionnalité du nœud victime, et le risque de sécurité élevé si l'attaque par DoS de l'échelle prédéterminée sur le nœud cible entraîne l'indisponibilité du nœud victime.

12. Procédé (100) selon la revendication 1, dans lequel le rapport d'analyse de sécurité de réseau généré (174) comprend des détails liés à chaque surface d'attaque identifiant des instances de paramètres de configuration de réseau non sécurisés, des défauts de conception de réseau, des contrôles de sécurité inadéquats et des vulnérabilités exploitables dans le sous-réseau correspondant et les nœuds de réseau associés à chaque surface d'attaque.

13. Procédé (100) selon la revendication 12, dans lequel le rapport d'analyse de sécurité de réseau généré (174) comprend en outre un ou plusieurs changements de configuration de réseau pour au moins l'une des instances identifiées de paramètres de configuration de réseau défectueux ou non sécurisés, de défauts de conception de réseau, de contrôles de sécurité inadéquats et de vulnérabilités exploitables dans le sous-réseau correspondant et les nœuds de réseau associés à chaque surface d'attaque.

14. Système (200) comprenant :
une ou plusieurs unités de traitement (204) ; et
une unité de mémoire (206) couplée en communication aux une ou plusieurs unités de traitement (204), l'unité de mémoire (206) comprenant un module d'analyse de sécurité de réseau (216) stocké sous la forme d'instructions lisibles par machine exécutables par les une ou plusieurs unités de traitement, le module d'analyse de sécurité de réseau (216) étant configuré pour exécuter les étapes du procédé (100) pour une analyse automatisée de configuration de la sécurité réseau de réseaux de technologie opérationnelle, OT, selon l'une quelconque des revendications 1 à 13.

15. Produit de programme informatique dans lequel sont stockées des instructions lisibles par machine, qui lorsqu'elles sont exécutées par une ou plusieurs unités de traitement (204), amènent les une ou plusieurs unités de traitement (204) à exécuter le procédé (100) mis en œuvre par ordinateur selon l'une quelconque des revendications 1 à 13.
